# EUROPEAN PATENT APPLICATION

(11) **EP 0 988 881 A1**
(43) Date of publication of application: **29.03.2000**
(21) Application number: 98203234.4
(22) Date of filing: 25.09.1998
(51) Int. Cl.: B01D 29/01, B01D 29/085

(54) **Sieving device for paint or the like and method for producing such**

(71) Applicant: EMM International B.V., 8013 PE Zwolle (NL)
(72) Inventor: The designation of the inventor has not yet been filed
(74) Representative: Smulders, Theodorus A.H.J., Ir.

(57) **Abstract**

Sieving device for paint or the like, comprising an outer wall and a sieving surface connected thereto at the lower end thereof, the sieving device being made substantially of plastic material.

## Description

The invention relates to a sieving device for paint or the like. Such sieving devices are commonly used for for example preparing spray paint.

The known sieving device comprises a paper outer wall having a generally conical form, defined by an outer wall. The outer wall is produced by bending a flat sheet of paper material into said conical form, the free edges thereof being glued together. Near the top of said conical outer wall at least one opening is provided over which a cotton sieving gauze is positioned which is glued to said outer wall. During use such sieving device is positioned above the open end of a container, the top of the conical outer wall facing downward, after which paint is poured onto the sieving gauze. Under the influence of gravity the paint passes said gauze into said container, said gauze retaining relatively large solid particles, such as clumps of paint.

These known sieving devices have the disadvantage that they are relatively costly and difficult to produce, whereas their sieving effect is often not sufficient and they are not sufficiently resistant to the paint or the like to be sieved, especially not to particular solvents, such as thinner, turpentine or water. Especially said paper-like outer wall will loose part of its strength under influence of said solvent. Thereabove, these known sieving devices have the disadvantage that small particles such as threads of paper or linen, dust, fluffs and the like may come loose from said outer wall or said sieving gauze and be blended into the paint, which threads, dust or fluffs or the like will at least partly pass said sieving gauze and end up in the spray and on the painted surface, thus resulting in a undesired painting result.

A main object of the present invention is to provide for a sieving device of the type presented in the opening paragraph, in which the drawbacks of the known sieving devices as discussed hereabove are avoided, maintaining the advantages thereof. This main object is reached according to the present invention by providing a sieving device having the features of claim 1.

By providing for a sieving device made substantially of a plastic material chances of contamination of the paint to be sieved therewith are significantly reduced. No threads, dust, fluffs or the like particles coming from said sieving device will contaminate the paint. Furthermore, such sieving device can be easily made and handled, will maintain their strength during use, can be easily made resistant against solvents and the like in the paint to be sieved and can be produced with relatively low costs. Moreover, such sieving devices will easily maintain their form during use, storage and shipment and could, if necessary, easily be cleaned before (re)use. A sieving device according to the present invention can be designed for single use as well as for multiple use.

In an advantageous embodiment a sieving device according to the present invention is further characterized by the features of claim 2.

A substantially flat sieving surface has the advantage that the sieving capacity and performance of the sieving device will be maintained during use of the device, even if relatively much contamination will be sieved. Surprisingly such flat surface has excellent sieving properties.

In a preferred embodiment a sieving device according to the present invention is further characterized by the features of claim 3.

The truncated, conical or polygonal body has the advantage that the sieving device can be easily positioned in or above a container, whereas the paint will easily be directed to the sieving surface, especially when the sieving surface is at least provided for at the truncated top surface of said body. During use said top surface will obviously be directed to the container in which the sieved paint or the like is to be received. Furthermore, such truncated form has the advantage that the sieving devices can be easily stacked inside each other.

In a further advantageous embodiment a sieving device according to the present invention is characterized by the features of claim 5.

Use of a polyetheen based plastic material for at least the outer wall has the advantage that this sieving device can be easily made at relatively low cost, whereas such plastic material is resistant to most commonly used solvents. Moreover, such plastic material can be easily recycled. Especially polyetheen terephtalate (PET) or similar plastic material is advantageous for these reasons, is readily available and easily formed into relatively thin sheet material. Different parts such as the sieving surface can be easily connected to such plastic materials, for example by gluing or thermosealing, or formed integrally.

The invention further relates to a method for producing a sieving device, especially according to any one of claims 1-7, characterized by the features of claim 8.

Such method has the advantage that it produces a sieving device having the advantages as mentioned, such as low risk of contamination of the paint during use, easy handling and manufacturing, easy storage and the like.

In a preferred embodiment a method according to the present invention is characterized by the features of claim 10.

Vacuum forming of at least the outer wall of a sieving device has the advantage that this is a relatively cheap and easy method, providing for at least the outer wall of said sieving devices with the appropriate properties. The outer wall can easily be made relatively thin and is substantially directly ready to use. Obviously at least the outer wall can also be made in a different manner, for example by diecasting, injection moulding or the like.

In a further advantageous embodiment a method according to the present invention is further characterized by the features of claim 11.

This method has the advantage that the outer wall of a sieving device can be readily and easily made by for example vacuum forming from a flat sheet of plastic material, after which the closed truncated end can be partly or completely removed and replaced by said sieving surface. Said sieving surface can then be connected to the outer wall. This is an easy and relatively cheap way to produce a simple to use and effective sieving device having superior properties.

Further advantageous embodiments of a sieving device and method according to the present invention are characterized by the features of the subclaims.

In elucidation of the present invention embodiments of a sieving device and method are further described in connection with the drawings. These show:
fig. 1 in sectional side view a sieving device according to the present invention;
fig. 2 a number of conical truncated bodies, vacuum formed in a sheet of plastic material, in sectional side view;
fig. 3 the bodies of figure 2 provided with an opening in the closed ends thereof; and
fig. 4 the bodies of figures 2 and 3 being provided with a sieving surface.

In this description corresponding parts have corresponding reference signs. Although in this description the sieving device will be discussed with reference to the sieving of paint, it will be clear that such sieving devices can also be used for sieving other liquids, suspensions and the like, such as lacquer.

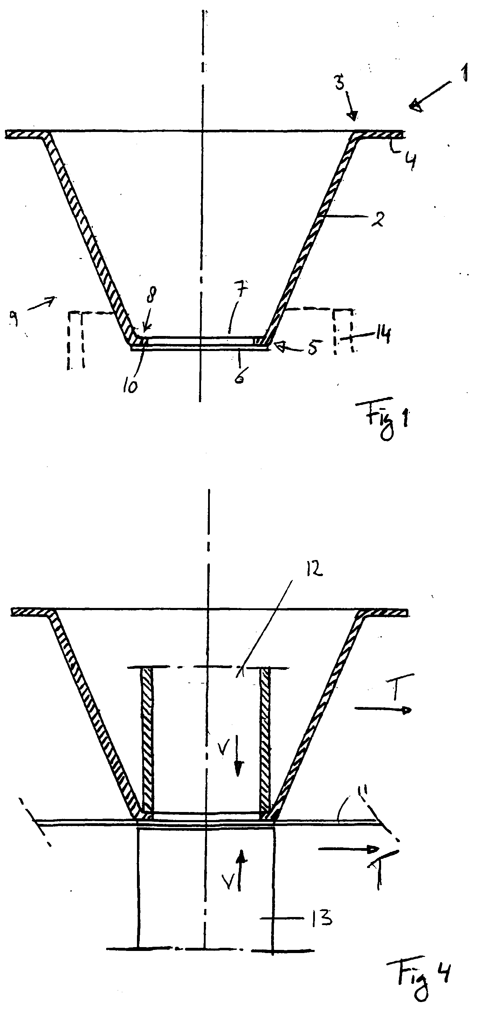

Figure 1 shows in sectional side view a sieving device 1 according to the present invention, having a substantially truncated conical shape, basically defined by an outer wall 2, at the open, wider end 3 connected to a circumferential edge 4, extending outward and at the opposite end 5 connected to a sieving surface 6, overlying an opening 7 in the to be called top surface 8 of the truncated conical body 9. In the embodiment as shown in the drawing the outer wall has a substantially conical shape though this outer wall can also have a different shape, for example polygonal or even irregularly shaped, for example a shape adjusted to a container with which the sieving device 1 has to be used. However, a substantially conical form is preferred.

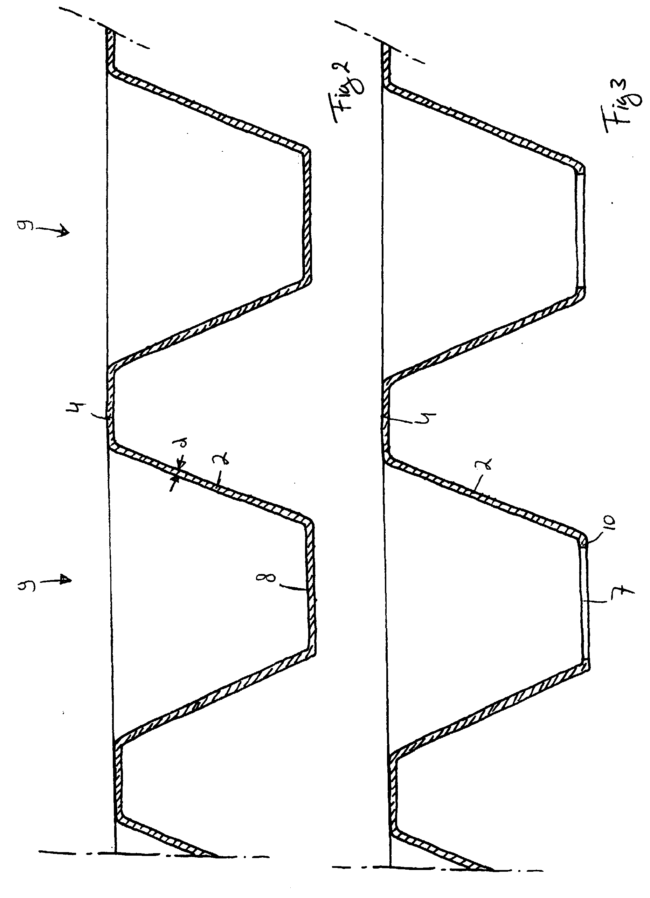

The top surface 8 has a diameter which is slightly larger than the diameter of the opening 7, such that a peripheral edge 10, extending inward, is left, to which the sieving surface 6 is connected, preferably by heat sealing, glue, high frequency welding or similar techniques. However, the sieving surface might also be made integrally with the outer wall 2, for example by injection moulding said device from one or even two different plastic materials. However, later connection of the sieving surface to the outer wall is preferred in a method to be discussed hereafter in connection with figures 2-4.

The outer wall 2, together with the edges 4 and 10 are made of plastic material, preferably a plastic material based on or containing polyetheen or the like. Such material can be easily formed into the desired shape having thin walls, is resistant to most commonly used solvents, especially water, is easily made printable and can easily be recycled. Especially polyetheen terephtalate (PET) is suitable. Such material is readily available as recycled plastic material, for example from plastic bottles and can easily be recycled again.

The sieving surface is preferably also made of plastic material and is very finely mashed. The sieving surface is for example made, by knitting or weaving, with a meshing of a plastic material, for example polystyrene, for example between 150 and 400 micrometer, preferably approximately 190 micrometer, 220 micrometer or 280 micrometer, that is relatively fine, medium and coarse. Obviously, the sieving properties of the sieving surface 6 can be readily chosen, dependent on the intended use of the sieving device.

Sieving devices 1 according to the present invention, as shown in the drawings can be easily stacked for storage and transport, thus requiring relatively little space, whereas the stacked devices will support each other.

A sieving device according to the present invention can for example be produced as follows.

As shown in figure 2, a number of truncated conical shaped bodies 9 is formed from a single sheet of plastic material, for example PET or PEN. A commonly known vacuum forming machinery can be used to this end. The bodies 9 have an outer wall 2 and closed top surfaces 8, whereas the peripheral edges 4 are interconnected. The outer wall 2 has a relatively small thickness D but is nevertheless sufficiently rigid.

As shown in figure 3, in the closed top surfaces 8 of the bodies 9 an opening 7 is formed, for example with a cutting die which can be incorporated in the vacuum forming apparatus, which leaves the edges 10 standing. Then the bodies 7 are placed with the edges 10 on a sheet or strip of sieving material 11, as shown in figure 4. A first sealing die 12, for example of a tube like hollow form, is pressed in the inside of the outer wall 2 against the inner surface of the top surface 8, against the edges 10. A second sealing die 13 is simultaneously pressed against the face of the strip of sieving material 11 facing away from the top surface 8, such that the sieving material 11 is clamped between the second sealing die 13 and the edges 10 of the top surface 8 forced in the direction of the second sealing die 13 by the first sealing die 12. Then sufficient heat is transferred to at least one of the sealing dies 12, 13, such that the outer edges of the sealing material 11 are sealed against the edges 10 of the top surface 8 of the sieving device 1. Then the circular part of the sieving material forming the sieving surface 6 sealed against the top surface 8 is cut out of the strip of sealing material 11 and the edges 4 or cut loose, after which the sieving device is ready for use.

During sealing of the sieving surface 6 the sealing dies 12, 13 and the sieving device 1 and sieving material 11 can be stationary, the sealing dies 12, 13 being moved only in a vertical direction V. However, the sieving devices 1 can also be made in a (semi-)continuous process, the dies 12, 13 moving together with the sieving device 1 and the strip of material 11 in the direction T, the sealing dies 12, 13 also moving in the direction V. With such method sieving devices 1 according to the present invention can be easily made in a (semi-)continuous process with high accuracy, which makes such sieving devices very economical.

A sieving device according to the present invention can be used as follows.

The sieving device is positioned with the top surface facing downward into the open end of a paint mixing container 14 or the like, indicated in figure 4 in dotted lines. Due to the conical shape such sieving device can be used with containers having various diameters. Paint to be sieved is poured into the open wider end 3 of the sieving device 1, after which the paint will be forced through the sieving surface 6 into the container 14 by gravity. Some of the particles such as clumps of paint are sieved out and retained within the sieving device. When all paint is forced through the sieving surface the sieving device can be taken away.

The present invention is by no means limited to the embodiments of the invention shown and described with respect to the drawings. Many alternative embodiments are possible within the scope as defined by the claims.

For example from a number of interconnected bodies 9 as shown in figure 2 the complete top surface 8 can be removed, after which a sieving surface can be connected to the inside or outer side of the outer wall. The sieving surface as shown is substantially flat, having the advantage that the sieving properties are maintained during use and is relatively cheap to produce. However, such sieving device can also have a different shape, for example semi-spherical, conical or the like, which can also provide for appropriate sieving properties. In the embodiment shown the sieving surface 6 can also be provided for on the inside of the body 9, that is on the other side of the edges 10. A sieving surface could also be provided in a ring-shaped retaining element which could be clamped over said edge 10. The edge 4 is not necessarily circumferential but could also extend over only part of the circumference. Such edges 4 can be used as a handle or for hanging of said device 1 in a holder, to which end at least one opening can be provided in said edge. Said edge could also be left out altogether. Although it is preferred that a sieving device according to the present invention has a smooth, continuous inner surface, ridges, dents and the like could also be provided, for example to increase the rigidity of said outer wall. Furthermore, the shape of the body 9 could be (almost) totally conical or polygonal and could be provided with means for fastening to a paint container, holder or the like.

The outer wall 2 can be made opaque but could also be clear, for example to provide for an easy view of the contents of the sieving device.

These and various similar alternatives are considered to fall within the scope of the present invention, defined by the claims.

## Claims

1. Sieving device for paint or the like, comprising an outer wall and a sieving surface connected thereto at the lower end thereof, the sieving device being made substantially of plastic material.

2. Sieving device according to claim 1, wherein the sieving surface is substantially flat.

3. Sieving device according to claim 1 or 2, wherein the outer wall and the sieving surface define a substantially truncated conical or polygonal body, the sieving surface preferably substantially defining the truncated top surface thereof.

4. Sieving device according to any one of the preceding claims, wherein the sieving surface is connected to the outer wall at least partly by heat sealing or similar technic.

5. Sieving device according to any one of the preceding claims, wherein said device is substantially made of a polyetheen based plastic material, preferably a polyetheen terephtalate (PET) or similar plastic material.

6. Sieving device according to any one of the preceding claims, wherein at least the outer wall is made of recycled plastic material.

7. Sieving device according to any one of the preceding claims, wherein at least the outer wall has been made of a foil like material by vacuum forming.

8. Method for producing a sieving device for paint or the like, wherein an outer wall is formed of a plastic material, a sieving surface formed at the lower end thereof.

9. Method according to claim 8, wherein the sieving surface is connected to the outer wall after forming of the outer wall.

10. Method according to claim 8 or 9, wherein the outer wall is made by vacuum forming or similar technic.

11. Method according to any one of claims 8 - 10, wherein the outer wall is produced having a closed lower end, whereafter an opening is provided in said the closed lower end by cutting away at least part thereof, the sieving surface being connected to the outer wall over said opening.
